# EUROPÄISCHE PATENTSCHRIFT

(11) **EP 1 986 102 B1**
(45) Veröffentlichungstag und Bekanntmachung des Hinweises auf die Patenterteilung: **27.01.2010**
(21) Anmeldenummer: 08102323.6
(22) Anmeldetag: 06.03.2008
(51) Int. Cl.: G06F 13/40, G06F 1/32, G06F 15/80

(54) **Prozessorsystem mit direkt verschalteten Ports**
Processor system with directly controllable ports
Système de processeur doté de ports directement commutés

(30) Priorität: 23.03.2007 DE 102007014132
(43) Veröffentlichungstag der Anmeldung: 29.10.2008
(73) Patentinhaber: Siemens Audiologische Technik GmbH, 91058 Erlangen (DE)
(72) Erfinder: Dickel, Thomas, 96155 Buttenheim (DE)
(74) Vertreter: Maier, Daniel Oliver

(56) Entgegenhaltungen:
- EP-A- 0 405 914
- EP-A- 1 841 284
- DE-A1- 19 504 089
- US-A1- 2002 082 716
- US-B1- 6 650 696

## Beschreibung

Die vorliegende Erfindung betrifft ein Prozessorsystem für eine Hörvorrichtung mit einem ersten Prozessor, der mindestens einen Ausgang besitzt, und zumindest einem zweiten Prozessor, der mindestens einen Eingang besitzt. Unter dem Begriff "Hörvorrichtung" wird hier insbesondere jedes am Ohr tragbare Gerät, z. B. ein Hörgerät, ein Headset, Kopfhörer und dergleichen, verstanden.

Hörgeräte sind tragbare Hörvorrichtungen, die zur Versorgung von Schwerhörenden dienen. Um den zahlreichen individuellen Bedürfnissen entgegenzukommen, werden unterschiedliche Bauformen von Hörgeräten wie Hinter-dem-Ohr-Hörgeräte (HdO) und In-dem-Ohr-Hörgeräte (IdO), z.B. auch Concha-Hörgeräte oder Kanal-Hörgeräte (CIC), bereitgestellt. Die beispielhaft aufgeführten Hörgeräte werden am Außenohr oder im Gehörgang getragen. Darüber hinaus stehen auf dem Markt aber auch Knochenleitungshörhilfen, implantierbare oder vibrotaktile Hörhilfen zur Verfügung. Dabei erfolgt die Stimulation des geschädigten Gehörs entweder mechanisch oder elektrisch.

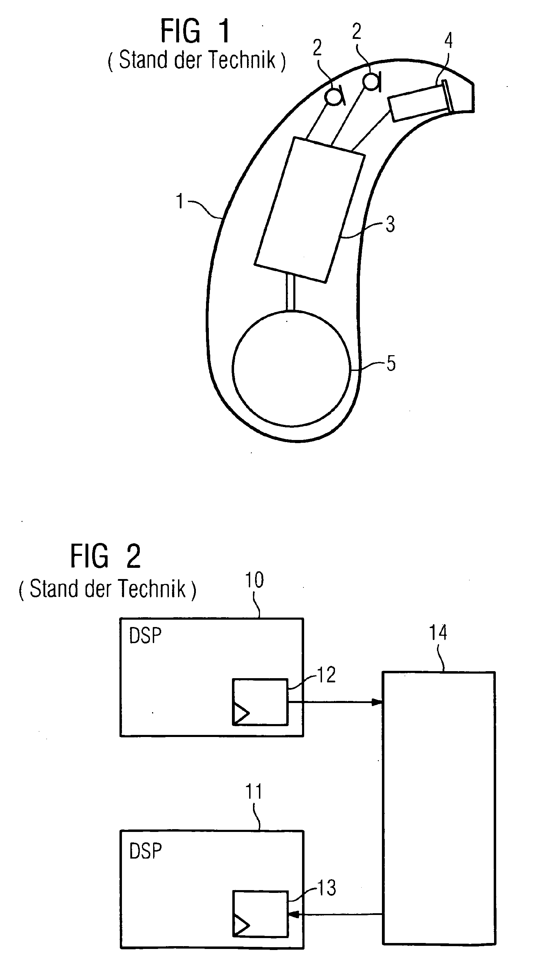

Hörgeräte besitzen prinzipiell als wesentliche Komponenten einen Eingangswandler, einen Verstärker und einen Ausgangswandler. Der Eingangswandler ist in der Regel ein Schallempfänger, z. B. ein Mikrofon, und/oder ein elektromagnetischer Empfänger, z. B. eine Induktionsspule. Der Ausgangswandler ist meist als elektroakustischer Wandler, z. B. Miniaturlautsprecher, oder als elektromechanischer Wandler, z. B. Knochenleitungshörer, realisiert. Der Verstärker ist üblicherweise in eine Signalverarbeitungseinheit integriert. Dieser prinzipielle Aufbau ist in FIG 1 am Beispiel eines Hinter-dem-Ohr-Hörgeräts dargestellt. In ein Hörgerätegehäuse 1 zum Tragen hinter dem Ohr sind ein oder mehrere Mikrofone 2 zur Aufnahme des Schalls aus der Umgebung eingebaut. Eine Signalverarbeitungseinheit 3, die ebenfalls in das Hörgerätegehäuse 1 integriert ist, verarbeitet die Mikrofonsignale und verstärkt sie. Das Ausgangssignal der Signalverarbeitungseinheit 3 wird an einen Lautsprecher bzw. Hörer 4 übertragen, der ein akustisches Signal ausgibt. Der Schall wird gegebenenfalls über einen Schallschlauch, der mit einer Otoplastik im Gehörgang fixiert ist, zum Trommelfell des Geräteträgers übertragen. Die Stromversorgung des Hörgeräts und insbesondere die der Signalverarbeitungseinheit 3 erfolgt durch eine ebenfalls ins Hörgerätegehäuse 1 integrierte Batterie 5.

In modernen Hörgeräten werden zunehmend digitale Signalprozessoren (DSP) eingesetzt. Es soll dadurch die Komplexität des Systems reduziert und die Flexibilität erhöht werden. Dies eröffnet die Möglichkeit, leistungsfähige Algorithmen am DSP zu implementieren. Dabei wird jedoch rasch die Grenze des zulässigen Stromverbrauchs erreicht. Dies gilt besonders für die Verarbeitung von Zeitbereichssignalen. Da sich bei der Verarbeitung dieses Signals der Berechnungsrahmen, d. h. das Unterprogramm für jeden einzelnen Abtastwert (Sample) mit der Abtastfrequenz des Signals wiederholt, sind Variable aus dem Speicher jedes Mal erneut zu holen und nach der Berechnung wieder abzulegen. Derartige Speicherzugriffe (Move-Befehle) können einen großen Teil der verfügbaren Prozessorleistung verbrauchen und somit erheblich den Stromverbrauch erhöhen.

Es gibt zahlreiche Möglichkeiten, diesem Problem zu begegnen. Alle Ansätze sind jedoch mit Nachteilen verbunden. So können beispielsweise bei einer Blockverarbeitung mehrere Abtastwerte in einem Rahmen direkt nacheinander sehr effektiv berechnet werden. Der Nachteil dabei ist jedoch, dass es zu erhöhten Durchlaufzeiten kommt, da die Abtastwerte zunächst gesammelt werden müssen und folglich so lange gewartet werden muss, bis die gewünschte Anzahl an Abtastwerten im Speicher ist.

Eine weitere Möglichkeit der Reduzierung der Prozessorleistung besteht in der Parallelverarbeitung mit mehreren Recheneinheiten in einem DSP, z. B. mehreren Multiplizier- und Ad dier-Einheiten (Multiply and Accumulate Units = MAC Units). Der Nachteil hierbei ist jedoch, dass diese Parallelverarbeitung nur für regelmäßige Algorithmen geeignet ist. D. h. nur Algorithmen, bei denen viele Rechenschritte immer gleich ablaufen, können von der Parallelverarbeitung profitieren, während beispielsweise Steuerfunktionen vielfach Einzelberechnungen erfordern, die nicht parallel ausgeführt werden können, da prinzipiell ein Prozessor nur ein Programmsteuerwerk (Control) aufweist.

Weitere Möglichkeiten zur Erhöhung der Prozessorleistung bestehen in der Erhöhung des Prozessortakts oder in dem Einsatz mehrerer Prozessoren. Nachteilig dabei ist jedoch wiederum, dass der Stromverbrauch proportional zum Prozessortakt bzw. proportional zur Anzahl der Prozessoren steigt. Außerdem belasten bei mehreren Prozessoren die Speicherzugriffe für die Kommunikation untereinander deren Leistungsfähigkeit und somit das Strombudget. Es könnten zwar mehrere spezialisierte und dadurch stromsparende Prozessoren mit reduziertem Befehlssatz eingesetzt werden, aber auch hier belasten die Speicherzugriffe für die Kommunikation untereinander die Leistungsfähigkeit und das Strombudget.

Aus der Druckschrift EP 1 841 284 A1 ist ein Hörinstrument zum Speichern kodierter Audiodaten bekannt. Ein digitaler Signalprozessor und weitere Elemente des Hörinstruments werden von einem Mikroprozessor gesteuert. Der Mikroprozessor empfängt kodierte Audiodaten von einem Speicher und überträgt sie mithilfe eines doppelten Puffers an den digitalen Signalprozessor.

Weiterhin offenbart die Druckschrift DE 195 04 089 A1 einen so genannten "Pipelined SIMD-Systolic Array-Prozessor". Die Ein- und Ausgänge von Prozessorelementen werden über Multiplexer direkt miteinander verschaltet.

In der Druckschrift EP-A-0 405 914 ist ein System zum Prozessieren von Audiosignalen beschrieben, bei dem mehrere Signalprozessoren wahlweise entweder parallel oder in kaskadierter Form ein Audiosignal bearbeiten. Bei der kaskadierten Verschaltung sind die Prozessoren in der Weise hintereinander geschaltet, dass ein Ausgang eines Signalprozessors mit einem Eingang des nachfolgenden Prozessors verbunden ist. Um Laufzeitunterschiede ausgleichen zu können, die sich bei einer parallelen Bearbeitung des Audiosignals zwischen den einzelnen Prozessoren ergeben können, bleiben die Prozessoren auch beim Parallelbetrieb kaskadiert geschaltet. Zum Übertragen eines Datums von einem Ausgang eines Signalprozessors zu einem Eingang des nachfolgenden Prozessors weist jeder Signalprozessor eine Eingabe-Ausgabe-Schnittstelle auf. Eine solche Schnittstelle verbindet einen internen Bus des Signalprozessors mit einem Eingang bzw. einem Ausgang des Signalprozessors. Dazu weist jede Schnittstelle ein Eingabe- und ein Ausgaberegister auf, über die Daten vom Bus zum Ausgang bzw. vom Eingang zum Bus übertragen werden können. In der Druckschrift ist auch eine Kopplung eines Ausgangs eines Signalprozessors mit einem Eingang eines weiteren Signalprozessors über einen Schalter beschrieben.

Die Aufgabe der vorliegenden Erfindung besteht somit darin, für Hörvorrichtungen ein Prozessorsystem vorzuschlagen, dessen Stromverbrauch weiter reduziert ist.

Erfindungsgemäß wird diese Aufgabe gelöst durch ein Prozessorsystem für eine Hörvorrichtung mit einem ersten Prozessor, der mindestens einen Ausgang besitzt, und zumindest einem zweiten Prozessor, der mindestens einen Eingang besitzt, sowie einer Schalteinrichtung, mit der der Ausgang des ersten Prozessors direkt an den Eingang des zweiten Prozessors schaltbar ist. Unter einem Prozessor wird hier eine Hardware-Recheneinheit zur Steuerung eines Geräts oder einer Komponente davon über Software verstanden.

Der Ausgang des ersten Prozessors weist dabei ein Ausgangsregister auf, während der Eingang des zweiten Prozessors ohne Register gebildet wird. Gleiches kann auch für alle anderen Eingänge und Ausgänge der Prozessoren gelten. Es genügt nämlich, die jeweilige Information in dem jeweiligen Ausgangsregister bereitzustellen, so dass eine beliebige Eingangsleitung darauf Zugriff hat.

Dadurch, dass die Prozessoren durch die Schalteinrichtung direkt miteinander verbunden sind, muss in vorteilhafter Weise keine Rechenleistung für die Kommunikation zwischen den Prozessoren aufgewendet werden. Dies führt zu einer erheblichen Einsparung beim Stromverbrauch.

Vorzugsweise verfügt jeder der Prozessoren jeweils über mehrere Eingänge und Ausgänge, und die Schalteinrichtung besitzt für jede Eingang-Ausgang-Kombination einen separaten Schalter zum direkten Verbinden miteinander. Dadurch wird ein Schaltnetzwerk bereitgestellt, mit dem die Eingänge und Ausgänge der Prozessoren flexibel miteinander verschaltet werden können.

Weiterhin ist es vorteilhaft, wenn die Schalteinrichtung matrixförmig aufgebaut ist und an jedem Knotenpunkt je ein Schalter angeordnet ist. Damit ist in sehr übersichtlicher Weise ein Verknüpfen von Eingängen und Ausgängen der Prozessoren möglich.

Darüber hinaus kann die Schalteinrichtung einen Konfigurationsspeicher aufweisen, in dem Schaltinformationen gespeichert sind, die zur Ansteuerung der Schalter verwendet werden. Dies erhöht die Flexibilität der Schalteinrichtung und damit des Prozessorsystems, da so mithilfe von Software unterschiedliche Schaltkonfigurationen problemlos erreicht werden können.

Das erfindungsgemäße Prozessorsystem findet besonders bevorzugt Verwendung in einem Hörgerät, denn dort ist das Einsparen von Strom bei dennoch hoher Prozessorleistung stets vorrangiges Ziel.

Die vorliegende Erfindung ist anhand der beigefügten Zeichnungen näher erläutert, in denen zeigen:
- FIG 1: den prinzipiellen Aufbau eines Hörgeräts gemäß dem Stand der Technik;
- FIG 2: ein Mehrprozessorsystem mit Prozessorkommunikation gemäß dem Stand der Technik und
- FIG 3: ein Mehrprozessorsystem mit Schaltnetzwerk gemäß der vorliegenden Erfindung.

Das nachfolgend näher geschilderte Ausführungsbeispiel stellt eine bevorzugte Ausführungsform der vorliegenden Erfindung dar. Zunächst sei jedoch anhand von FIG 2 kurz erläutert, wie die Kommunikation zwischen zwei Prozessoren gemäß dem Stand der Technik vonstatten geht, um die vorliegende Erfindung besser verstehen zu können.

Die FIG 2 zeigt zwei Prozessoren 10 und 11. Jede von ihnen besitzt ein Register 12, 13. Falls Daten von dem DSP 10 in den DSP 11 übertragen werden sollen, wird üblicherweise ein Speicher 14 dazwischengeschaltet. Die Datenübertragung erfolgt dann in einem ersten Schritt von einem Ausgangsregister 12 des DSP 10 in den Speicher 14. Hierzu sind eine Adressierung und spezielle Speichersteuersignale notwendig. In einem zweiten Schritt werden die Daten von dem Speicher 14 in ein Eingangsregister 13 des DSP 11 geladen. Auch dies erfordert eine Adressierung und Speichersteuersignale. Üblicherweise kommunizieren die Prozessoren 10, 11 mit direktem Speicherzugriff (DMA= direct memory access) über gemeinsame Speicheradressen (shared memory). Derartige Speicherzugriffe belasten jedoch das System hinsichtlich Leistung und Stromverbrauch. Gerade für Hörgeräte gilt es jedoch, für die Signalverarbeitung möglichst wenig Energie zu verbrauchen.

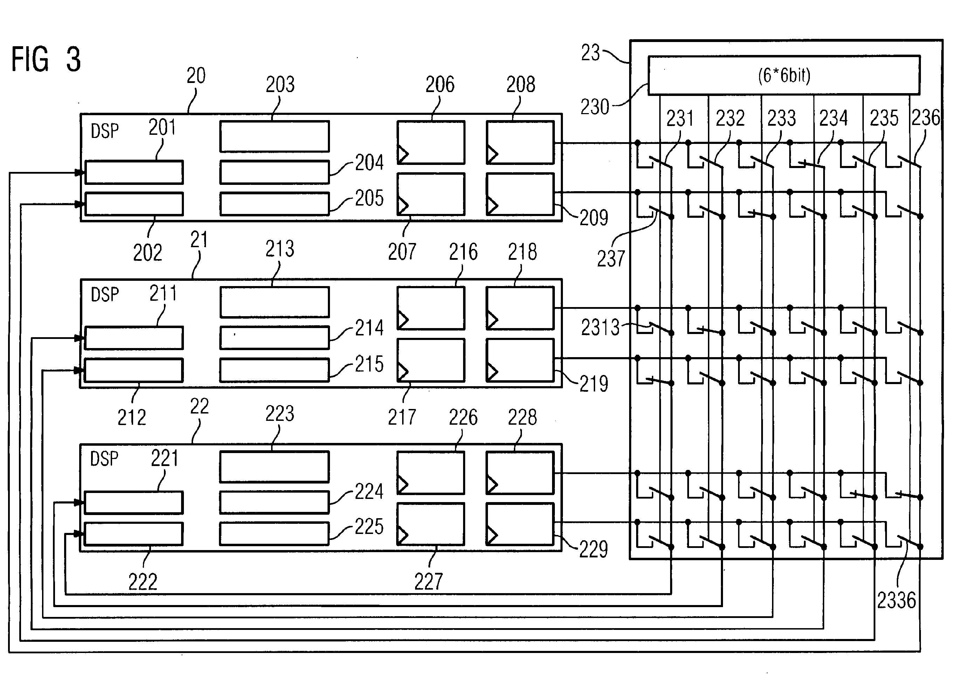

Entsprechend der vorliegenden Erfindung ist daher vorgesehen, wie in FIG 3 dargestellt ist, mehrere Prozessoren bzw. DSPs 20, 21 und 22 mit einem Schaltnetzwerk 23 zu verbinden, ohne dass ein Speicher für die Kommunikation der einzelnen Prozessoren untereinander notwendig wäre. In dem vorliegenden Beispiel besitzt jeder der drei Prozessoren je zwei Eingangsports 201, 202; 211, 212; 221, 222. Außerdem verfügt jeder der Prozessoren 20, 21, 22 über einen Speicher 203, 213, 223 sowie eine Steuereinheit 204, 214, 224 und eine Arithmetik-Logik-Einheit 205, 215, 225. Darüber hinaus sind in jedem Prozessor 20, 21, 22 im vorliegenden Fall zwei interne Register 206, 207; 216, 217; 226, 227 und zwei Ausgangsregister 208, 209; 218, 219; 228, 229 vorgesehen. Jede der Steuereinheiten 204, 214, 224 dient zum Durchführen einer jeweiligen Ablaufsteuerung im Prozessor. Hierzu greift sie beispielsweise zum Laden von Befehlen auf den prozessorinternen Speicher 203, 213, 223 und für die Daten auf die Eingangsports 201, 202; 211, 212; 221, 222 oder die internen Register 206, 207; 216, 217; 226, 227 zu. Gegebenenfalls werden zur Ausführung dieser Befehle auf der Grundlage der zur Verfügung stehenden Daten Berechnungen in der jeweiligen Arithmetik-Logik-Einheit 205, 215, 225 durchgeführt. Die Ergebnisse der Datenverarbeitung werden in jedem Prozessor 20, 21, 22 in den jeweils internen Ausgangsregistern 208, 209; 218, 219; 228, 229 abgelegt.

Um nun die in den Ausgangsregistern 208, 209; 218, 219; 228, 229 abgelegten Daten für jeweils einen anderen Prozessor zur Verfügung zu stellen, werden die Ausgangsregister wunschgemäß mit dem Schaltnetzwerk 23 direkt und individuell mit den Eingangsports 201, 202; 211, 212; 221, 222 verbunden. Da es im vorliegenden Beispiel grundsätzlich 6 x 6 Möglichkeiten gibt, die Ausgangsregister mit den Eingangsports zu verschalten, verfügt das Schaltnetzwerk 23 über 36 Schalter 231 bis 2336. Diese Schalter sind matrixförmig angeordnet. Beispielsweise ist das Ausgangsregister 208 des Prozessors 20 mit den Schaltern 231, 232, 233, 234, 235 und 236 verbunden. In vertikaler Richtung der Matrix sind beispielsweise die Schalter 231, 237, 2313, 2319, 2325 und 2331 mit dem Eingangsport 222 des Prozessors 22 verbunden. Die übrigen Ausgangsregister und Eingangsports sind analog verschaltet. Jeder der Schalter 231 bis 2336 wird von einem internen Konfigurationsspeicher 230 des Schaltnetzwerks 23 angesteuert. In dem vorliegenden Beispiel ist also das Schaltnetzwerk mit 36 Bit kodiert. Diese Kodierung ist beim Systemstart in dem Speicher 230 zu hinterlegen und kann gegebenenfalls geändert werden.

Die Kommunikation zwischen den Prozessoren erfolgt nun über diese geschalteten Verbindungen. Im vorliegenden Beispiel sind unter anderem die Schalter 234 und 239 durchgeschaltet, so dass sich einerseits eine Verbindung zwischen dem Ausgangsregister 208 des Prozessors 20 und dem Eingangsport 211 des Prozessors 21 und andererseits eine Verbindung zwischen dem Ausgangsregister 209 des Prozessors 20 und dem Eingangsport 212 des Prozessors 21 ergibt. Die Ausgangsports sind also als Register zu sehen und werden direkt mit der Ausführung eines Rechenschritts beschrieben. Das Ergebnis des Rechenschritts steht somit unmittelbar dem nachgeschalteten Prozessor zur Verfügung. Ein spezieller Speicherzugriff mit Adressierung und Speicheransteuerung ist nicht notwendig.

Folglich kann bei der Kommunikation zwischen den beiden Prozessoren Energie eingespart werden.

Grundsätzlich können die im obigen Beispiel dargestellten Signalleitungen auch Busse aus mehreren Einzelleitungen (z. B. zur parallelen Übertragung von 16 bit Datenworten) sein.

Erfindungsgemäß wird somit ein optimiertes Prozessorsystem bereitgestellt, welches aus mehreren Signalverarbeitungseinheiten mit direkter, stromsparender Kommunikationsmöglichkeit besteht. Wird bei den Signalverarbeitungseinheiten bzw. Prozessoren ein spezialisierter Befehlssatz verwendet, kann weiter Strom eingespart werden.

## Patentansprüche

1. Prozessorsystem für eine Hörvorrichtung mit
- einem ersten Prozessor (20), der mindestens einen Ausgang (208, 209) besitzt,
- zumindest einem zweiten Prozessor (21), der mindestens einen Eingang (211, 212) besitzt, und
- einer Schalteinrichtung (23), mit der der Ausgang (208, 209) des ersten Prozessors (20) direkt an den Eingang (211, 212) des zweiten Prozessors (21) schaltbar ist,
**dadurch gekennzeichnet, dass** der Ausgang (208, 209) des ersten Prozessors (20) ein Ausgangsregister aufweist, während der Eingang (211, 212) des zweiten Prozessors (21) ohne Register gebildet ist.

2. Prozessorsystem nach Anspruch 1, wobei jeder der Prozessoren (20, 21) jeweils über mehrere Eingänge und Ausgänge verfügt und die Schalteinrichtung (23) für jede Eingang-Ausgang-Kombination einen separaten Schalter (231 bis 2336) zum direkten Verbindung miteinander besitzt.

3. Prozessorsystem nach Anspruch 2, wobei die Schalteinrichtung (23) matrixförmig aufgebaut ist und an jedem Knotenpunkt je ein Schalter angeordnet ist.

4. Prozessorsystem nach Anspruch 2 oder 3, wobei die Schalteinrichtung (23) einen Konfigurationsspeicher (230) aufweist, in dem Schaltinformationen gespeichert sind, die zur Ansteuerung der Schalter verwendet werden.

5. Hörgerät mit einem Prozessorsystem nach einem der vorhergehenden Ansprüche, das zur Signalverarbeitung eines Eingangssignals dient.

## Claims

1. Processor system for a hearing apparatus having
- a first processor (20) which has at least one output (208, 209) and
- at least one second processor (21), which has at least one input (211, 212), and
- a switching facility (23), with which the output (208, 209) of the first processor (20) can be directly connected to the input (211, 212) of the second processor (21),
**characterised in that**
the output (208, 209) of the first processor (20) has an output register, while the input (211, 212) of the second processor (21) is formed without a register.

2. Processor system according to claim 1, with each of the processors (20, 21) having several inputs and outputs in each instance and the switching facility (23) for each input-output combination having a separate switch (231 to 2336) for direct connection with one another.

3. Processor system according to claim 2, with the switching facility (23) being designed in the manner of a matrix, and a switch being arranged at each node point in each instance.

4. Processor system according to claim 2 or 3, with the switching facility (23) having a configuration memory (230), in which switching information is stored, which is used to control the switch.

5. Hearing device with a processor system according to one of the preceding claims, which is used for signal processing of an input signal.

## Revendications

1. Système de processeur pour une prothèse auditive comprenant
- un premier processeur ( 20 ) qui a au moins une sortie ( 208, 209 ),
- au moins un deuxième processeur ( 21 ) qui au moins une entrée ( 211, 21 ) et
- un dispositif ( 23 ) de commutation par lequel la sortie ( directement à l'entrée ( 211, 212 ) du deuxième processeur ( 21 ),
**caractérisé en ce que** la sortie ( 208, 209 ) du premier processeur ( 20 ) a un registre de sortie, tandis que l'entrée ( 211, 212 ) du deuxième processeur ( 21 ) est formé sans registre.

2. Système de processeur suivant la revendication 1, dans lequel chacun des processeur ( 20, 21 ) dispose respectivement de plusieurs entrées et sorties et le dispositif ( 23 ) de commutation a pour chaque combinaison d'entrée-sortie un commutateur ( 231 à 2336 ) distinct pour la liaison directe entre elles.

3. Système de processeur suivant la revendication 2, dans lequel le dispositif ( 23 ) de commutation est constitué sous la forme d'une matrice et un commutateur est disposé respectivement à chaque point nodal.

4. Système de processeur suivant la revendication 2 ou 3,
dans lequel le dispositif ( 23 ) de commutation a une mémoire ( 230 ) de configuration, dans laquelle sont mémorisées des informations de commutation, qui sont utilisées pour commander les commutateurs.

5. Prothèse auditive ayant un système de processeur suivant l'une des revendications précédentes, qui sert au traitement d'un signal d'entrée.
